## Europäisches Patentamt

## European Patent Office

## Office européen des brevets

(19)

(11) Numéro de publication: **0 254 628 B1**

---

## FASCICULE DE BREVET EUROPEEN

(12)

(45) Date de publication du fascicule du brevet:
22.11.90

(51) Int. Cl.⁵: **G06F 15/332**

(21) Numéro de dépôt: 87401635.5

(22) Date de dépôt: 10.07.87

---

(54) Circuit de traitement numérique de signal réalisant une transformation cosinus.

---

(30) Priorité: 23.07.86 FR 8610683

(43) Date de publication de la demande:
27.01.88 Bulletin 88/4

(45) Mention de la délivrance du brevet:
22.11.90 Bulletin 90/47

(84) Etats contractants désignés:
DE FR GB IT NL

(73) Titulaire: THOMSON SEMICONDUCTEURS, 101, bld Murat, F-75016 - Paris(FR)

(72) Inventeur: Cambonie, Joel, THOMSON-CSF SCPI 19, avenue de Messine, F-75008 Paris(FR)
Inventeur: Mackowiak, Eugène, THOMSON-CSF SCPI 19, avenue de Messine, F-75008 Paris(FR)
Inventeur: Le Pannerer, Yves-Marie, THOMSON-CSF SCPI 19, avenue de Messine, F-75008 Paris(FR)

(74) Mandataire: Guérin, Michel et al, THOMSON-CSF SCPI, F-92045 PARIS LA DEFENSE CEDEX 67(FR)

(56) Documents cités:
IEEE TRANSACTIONS ON ELECTROMAGNETIC COMPATIBILITY, vol. EMC-24, no. 2, mai 1982, pages 278-286, IEEE, New York, US; A. JALALI et al.: "A high-speed FDCT processor for real-time processing of NTSC color TV signal"
IEEE JOURNAL ON SELECTED AREAS IN COMMUNICATIONS, vol. SAC-4, no. 1, janvier 1986, pages 49-61, IEEE, New York, US; M. VETTERLI et al.: "A discrete Fourier-cosine transform chip"
PROCEEDINGS OF THE IEEE 1979 NATIONAL AEROSPACE AND ELECTRONICS CONFERENCE - NAECON 1979, Dayton Convention Center, 15-17 mai 1979, vol. 3, pages 1318-1321, IEEE, New York, US; D. LUDINGTON: "Real time compression of video signals"

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un circuit de traitement numérique de signal capable d'accomplir une fonction de transformation particulière appelée "transformation cosinus".

Ce type de transformation fait correspondre une matrice de valeurs numériques de sortie à une matrice de valeurs numériques d'entrée selon une fonction de transformation bien particulière que l'on explicitera ci-dessous. Cette transformation est particulièrement utile pour effectuer de la compression d'informations, c'est-à-dire une transmission d'informations à un débit plus élevé que celui qui serait possible si les signaux étaient envoyés sans transformation.

La transformation cosinus n'effectue en elle-même aucune compression d'informations ; c'est un codeur placé en aval du circuit de transformation qui fait la compression. Mais le circuit de transformation facilite la compression en fournissant à l'entrée du codeur des informations faciles à comprimer.

Ce circuit de transformation trouve son application la plus intéressante dans la transmission numérique d'images en noir et blanc ou en couleurs et c'est en se référant à cet exemple que la présente invention sera décrite.

L'image de base que l'on cherche à transmettre comprend un bloc de N lignes de N points, chaque point étant constitué par un pixel représenté par une valeur numérique codée par exemple sur 8 bits ; cette valeur correspond par exemple à la luminance ou à une composante de chrominance du pixel.

Au bloc de N×N pixels, la transformation cosinus fait correspondre un bloc de N×N coefficients.

On notera x(i,j) la valeur du pixel situé au croisement de la ligne i et la colonne j du bloc.

On notera C(u,v) le coefficient calculé selon la transformation cosinus et placé à l'intersection de la ligne u et la colonne v dans le bloc transformé.

La transformation cosinus s'explicite par la fonction mathématique suivante pour un bloc de N×N pixels :

$$C(u,v) = K \sum_{i=0}^{N-1} \sum_{j=0}^{N-1} x(i,j) \cos\left(\frac{2j+1}{2N} v\pi\right) \cos\left(\frac{2i+1}{2N} u\pi\right)$$

K est un coefficient de normalisation qui s'exprime comme une puissance entière de 2.

Lorsqu'un bloc de N×N pixels x(i,j) a subi cette transformation et est devenu un bloc de N×N coefficient C(u,v) transmis après compression sur une voie telle qu'une ligne téléphonique, les signaux reçus à l'autre bout de la ligne subissent d'abord une décompression puis une nouvelle transformation cosinus pour aboutir à nouveau à un bloc numérique de N×N pixels. La première transformation est dite transformation cosinus aller Tcos ; la seconde est dite transformation cosinus retour T⁻¹ cos. C'est un des buts de l'invention que de faire en sorte que le même circuit puisse servir à exécuter ces deux transformations.

La transformée cosinus aller explicitée ci-dessus est le résultat d'une double sommation : sommation sur les pixels d'une ligne i pour établir N coefficients intermédiaires Cⁱ(v) v étant l'indice de colonne du bloc transformé ; puis sommation sur les coefficients intermédiaires, colonne par colonne, pour obtenir les coefficients C(u,v), u étant l'indice de ligne du bloc transformé. La première sommation sera appelée transformée ligne aller Tlin ; la seconde sera appelée transformée colonne aller Tcol. Réciproquement, lors de la transformation cosinus retour on exécutera une première sommation appelée transformée ligne retour T⁻¹lin et une seconde sommation appelée transformée colonne retour T⁻¹col.

La transformée ligne aller fait correspondre au bloc de pixels x(i,j) le bloc de coefficients Cⁱ(v) par la formule :

$$C^i(v) = \sum_{j=0}^{N-1} x(i,j) \cos\frac{2j+1}{2N} v\pi$$

Le bloc de données à traiter :

$$x(0,0) \quad x(0,1) \quad x(0,j) \quad x(0,N-1)$$
$$x(1,0) \quad x(1,1) \quad x(1,j) \quad x(1,N-1)$$

$$x(i,0) \quad x(i,1) \quad x(i,j) \quad x(i,N-1)$$

$$x(N-1,0) \quad x(N-1,1) \quad x(N-1,j) \quad x(N-1,N-1)$$

devient, après la première sommation en ligne Tlin,

$$C^0(0) \quad C^0(1) \quad C^0(v) \quad C^0(N-1)$$
$$C^1(0) \quad C^1(1) \quad C^1(v) \quad C^1(N-1)$$

$$C^i(0) \quad C^i(1) \quad C^i(v) \quad C^i(N-1)$$

$$C^{N-1}(0) \quad C^{N-1}(1) \quad C^{N-1}(v) \quad C^{N-1}(N-1)$$

La transformée colonne aller (deuxième sommation) fait correspondre à ce bloc de coefficients intermédiaires $C^i(v)$ le bloc transformé de coefficients $C(u,v)$ suivant :

$$
\begin{array}{llll}
C(0,0) & C(0,1) & C(0,v) & C(0,N-1) \\
C(1,0) & C(1,1) & C(1,v) & C(1,N-1) \\
\\
C(u,0) & C(u,1) & C(u,v) & C(u,N-1) \\
\\
C(N-1,0) & C(N-1,1) & C(N-1,v) & C(N-1,N-1)
\end{array}
$$

avec

$$
C(u,v) = \sum_{i=0}^{N-1} C^i(v) \cos \frac{2i+1}{2N} u\pi
$$

Un algorithme a été proposé pour le calcul des coefficients $C^i(v)$ et $C(u,v)$ : l'algorithme de Byeong Gi Lee, qui permet d'effectuer la transformée ligne ou la transformée colonne avec 32 multiplications et 81 additions, pour un bloc de 16×16 pixels.

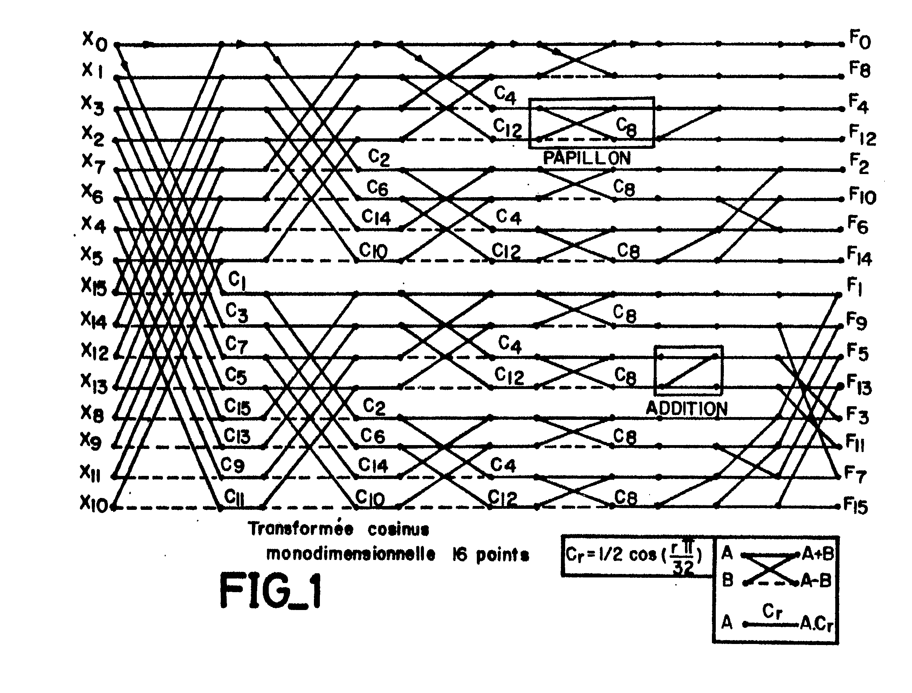

Cet algorithme est représenté à la figure 1 sous forme d'un graphe dont les entrées sont 16 valeurs numériques $x_0$ à $x_{15}$ et les sorties 16 valeurs $F_0$ à $F_{15}$ ; les points noirs sont des valeurs de calcul intermédiaires. Si $x_0$ à $x_{15}$ représentent 16 données $x(i,0)$ à $x(i,15)$, alors $F_0$ à $F_{15}$ représentent 16 coefficients $C^i(0)$ à $C^i(15)$ résultant de la transformée ligne. Si $x_0$ à $x_{15}$ représentent 16 coefficients $C^0(v)$ à $C^{15}(v)$, alors $F_0$ à $F_{15}$ représentent 16 coefficients $C(0,v)$ à $C(15,v)$ résultant de la transformation colonne consécutive à la transformation ligne.

Le graphe récapitule les opérations qui sont effectuées à la fois simultanément et successivement.

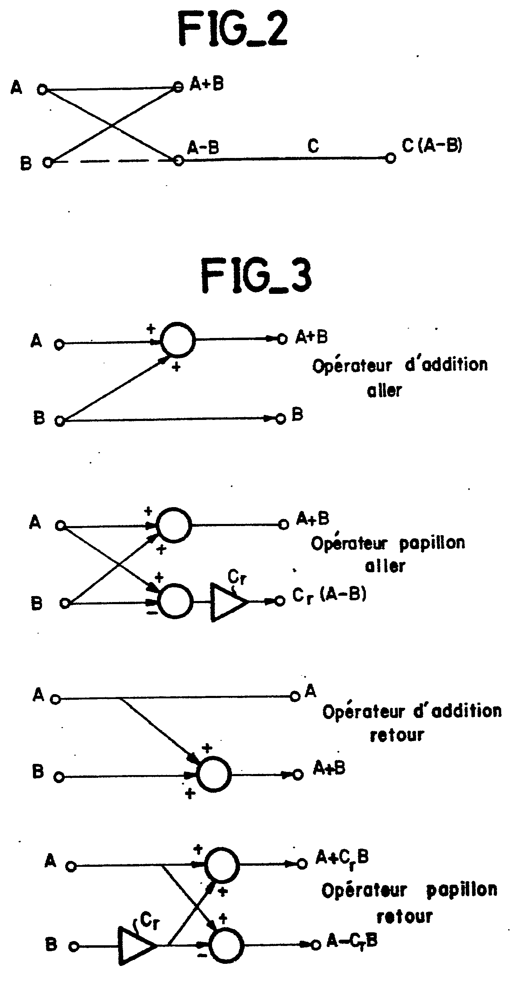

Le symbolisme utilisé dans le graphe de la figure 1 est expliqué en référence à la figure 2 :

- l'addition de deux nombres A et B est indiquée par une ligne horizontale continue et une ligne oblique, ces lignes partant respectivement d'un point noir représentant le nombre A et d'un point noir représentant le nombre B et aboutissant toutes deux en un point noir représentant la somme A+B.

- la soustraction de ces deux nombres est indiquée par une ligne horizontale pointillée partant de B et une ligne oblique partant de A, ces lignes aboutissant en un point représentant le nombre A-B.

- la multiplication par un coefficient $c_r$, est représentée par un trait continu horizontal, au-dessus duquel est placé le coefficient, partant d'un premier point noir et aboutissant à un autre point noir représentant le résultat de la multiplication de la valeur du premier point noir par le coefficient $c_r$ ; sur la figure 2 on a représenté la multiplication de A-B par un coefficient $c_r$. L'absence de coefficient au-dessus d'un tel trait horizontal est analogue à une multiplication par 1.

Revenant au graphe de la figure 1, les coefficients multiplicatifs indiqués sont de la forme :

$c_r = 1/2 \cos (r\pi/32)$

Sans entrer dans toutes les explications de ce graphe (connu), on peut noter les remarques principales suivantes.

a) le graphe est régulier et se résume à plusieurs opérations successives effectuées à chaque fois simultanément sur plusieurs couples de variables A et B

b) deux opérations élémentaires sont effectuées régulièrement, l'une est dite "opération d'addition", l'autre est dite "opération papillon". L'opération d'addition de la transformée "aller" fait correspondre à deux valeurs (A,B) deux autres valeurs (A+B, B) ; l'opération d'addition de la transformée retour fait correspondre aux valeurs (A,B) deux autre valeurs (A, A+B). L'opération papillon aller fait correspondre à deux valeurs (A,B) deux autres valeurs (A+B, $c_r$(A-B) ; l'opération papillon retour fait correspondre à deux valeurs (A,B) deux autres valeurs (A+$c_r$B, A-$c_r$B). Ces quatre opérations sont détaillées à la figure 3.

c) la régularité du graphe est obtenue à condition que les entrées de valeurs $x_0$ à $x_{15}$ soient appliquées dans un ordre très particulier, que l'on appellera "ordre brouillé" qui est l'ordre visible à la figure 1 : $x_0$,

$x_1$, $x_3$, $x_2$, $x_7$ etc..., et à condition que les sorties de la transformée soient obtenues selon un autre ordre, différent du premier, et qui sera appelé ordre inversé (en anglais "bit reversed") ; cet ordre est visible aussi sur la figure 1 : $F_0$, $F_8$, $F_4$, $F_{12}$, etc...

d) les calculs intermédiaires ne génèrent pas plus de 16 résultats à la fois, de sorte que l'algorithme peut être exécuté en n'utilisant qu'une mémoire de travail de 16 mots, cette mémoire contenant initialement les 16 valeurs de pixels d'entrée et contenant à la fin 16 coefficients résultant de la transformée.

e) les coefficients multiplicatifs $c_r$ sont constants et peuvent être stockés dans une mémoire morte de coefficients (mémoire de 16 mots).

f) la transformée retour s'obtient en lisant le graphe de droite à gauche et en utilisant les sorties comme entrées.

Diverses architectures de circuits intégrés ont été proposées pour réaliser des transformations cosinus, ces architectures présentant des inconvénients du fait qu'elles utilisent des multiplieurs rapides, des mémoires à double accès, et des schémas complexes. De plus, elles s'adaptent difficilement à différentes tailles de blocs. Enfin, elles sont irrégulières car elles mettent en oeuvre des éléments disparates tels que : mémoires de ligne, de blocs, multiplieurs et additionneurs.

Un but de la présente invention est de proposer une architecture nouvelle de circuit accomplissant la fonction de transformation cosinus aller ou retour sur un bloc de N×N valeurs (dans la suite on prendre toujours comme exemple N=16).

Un autre but de l'invention est de réaliser un circuit de transformation aller (ou inversement de retour) qui est constitué d'un premier circuit intégré accomplissant la transformation ligne aller Tlin (ou inversement retour $T^{-1}$lin) en cascade avec un second circuit intégré accomplissant la transformation colonne aller Tcol (ou inversement retour $T^{-1}$col).

Le même circuit intégré servira aux quatres transformations Tlin, Tcol, $T^{-1}$lin, $T^{-1}$col et ce circuit comportera deux broches extérieures qui, selon leur état, déterminent le type de transformation effectué.

Ce circuit intégré effectue une sommation sur des blocs de 16×16 points, et un but de l'invention est d'obtenir que la transformation cosinus s'effectue en temps réel dans une application à une transmission d'image de télévision où les pixels arrivent à une fréquence de 13,5 MHz et sont codés sur 8 bits, les résultats étant codés sur 16 bits avec une précision interne de calcul de 16 bits.

Globalement, l'invention propose un circuit intégré de traitement numérique de signaux, destiné à recevoir des signaux représentant des valeurs numériques : x(i,j) et à produire des signaux représentant des coefficients $C^i(v)$ de la forme

$$C^i(v) = \sum_{j=0}^{N-1} x(i,j) \cos\frac{2j+1}{2N} v\pi$$

où i,j représentent des indices de ligne et de colonne d'une matrice de N×N valeurs numériques x(i,j), et i et v représentent des indices de ligne et de colonne d'une matrice de N×N coefficients $C^i(v)$, caractérisé en ce qu'il comporte deux mémoires de N lignes de N mots (MEM I, MEM II), N unités de calcul (OP$_0$ à OP$_{15}$) couplées chacune alternativement à une ligne d'une mémoire puis à une ligne correspondante de l'autre mémoire, avec un séquenceur commun pour commander simultanément et de la même manière les N unités de calcul, le séquenceur étant agencé pour faire fonctionner alternativement les deux mémoires de la manière suivante :
- dans une première alternance l'une des mémoires sert de mémoire de travail contenant initialement N×N données x(i,j) à traiter, les unités de calcul effectuent des calculs identiques chacune sur une ligne de N données, pour aboutir à N×N résultats de calcul qui sont placés dans cette mémoire, et, simultanément, l'autre mémoire sert de mémoire tampon qui est commandée pour assurer le déchargement de résultats de calcul qu'elle contient et le chargement de nouvelles données à traiter
- dans une seconde alternance les rôles des mémoires sont inversés.

Les caractéristiques et avantages de l'invention seront décrits en détail dans la suite, en référence aux dessins annexés dans lesquels :

- la figure 1 représente le graphe de l'algorithme de Byeong Gi Lee pour une transformation cosinus monodimensionelle (transformation ligne ou transformation colonne) effectuée sur 16 points,
- la figure 2 explique le symbolisme utilisé dans le graphe de la figure 1,
- la figure 3 représente les quatre opérateurs, agissant sur des couples de données, que l'on rencontre répétitivement dans le graphe de la figure 1,
- la figure 4 représente l'architecture générale du circuit selon l'invention,
- la figure 5 représente la constitution d'un élément de l'unité de calcul et sa connexion à une ligne de la mémoire de travail pendant l'exécution d'un calcul,
- la figure 6 représente la constitution globale de l'unité de calcul, et sa liaison avec une mémoire de travail,

- la figure 7 représente l'architecture des mémoires fonctionnant comme mémoire tampon,
- la figure 8 représente la mise en cascade de deux circuits identiques réalisant l'un la transformée ligne et l'autre la transformée colonne,
- la figure 9 représente la constitution globale du circuit intégré en 16 blocs contenant chacun une unité de calcul élémentaire et deux mémoires de ligne fonctionnant alternativement comme mémoire tampon et comme mémoire de travail,
- la figure 10 représente le schéma détaillé d'un bloc de la figure 9,
- la figure 11 représente le générateur d'adresses définissant les adresses de lecture et d'écriture de la mémoire tampon pendant le déstockage et le stocakge de données,
- la figure 12 représente un exemple préférentiel de transformateur d'indice du générateur d'adresse,
- la figure 13 récapitule l'organisation du circuit autour du séquenceur.

La structure du circuit intégré comporte deux mémoires d'une capacité globale de NxNxp bits chacune où p est le nombre de bits de codage des résultats intermédiaires de calcul (p=16 dans l'exemple choisi), et une unité de calcul microprogrammée capable d'assurer le débit de calcul imposé par la cadence d'échantillonnage des points. Les deux plans mémoires sont identiques mais leurs rôles diffèrent au cours du temps et ces rôles sont alternés régulièrement.

Si la période d'échantillonnage des points à traiter est Téch (par exemple Téch=74 nanosecondes), le traitement se fait par blocs de NxN points et la période d'échantillonnage Tb des blocs est de NxN Téch (par exemple Tb=256 Téch). Un signal d'horloge Hcy définit l'alternance des rôles des deux mémoires : pendant l'état logique haut de Hcy (durée Tb), la première mémoire contient le bloc de points en cours de traitement et elle sert de mémoire de travail pour les calculs faits sur ce bloc ; simultanément, la deuxième mémoire sert de tampon d'entrée-sortie pour décharger les NxN résultats de calcul contenus dans cette mémoire et charger un nouveau bloc de NxN points à traiter.

Pendant l'état bas $\overline{Hcy}$ de Hcy (même durée Tb), les rôles des deux mémoires sont inversés.

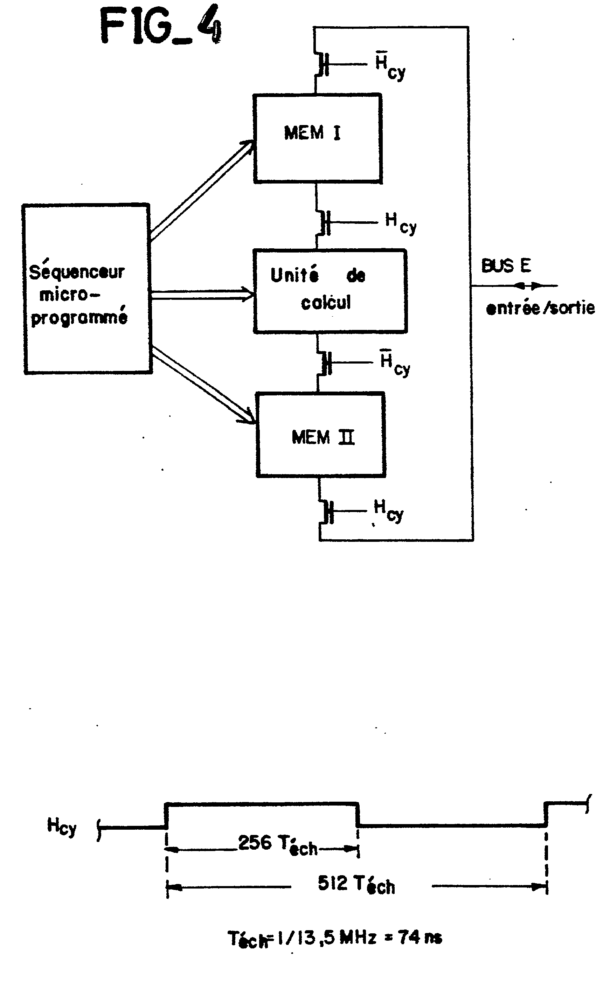

La figure 4 représente schématiquement cette structure, avec des transistors d'isolement commandés soit par Hcy soit par $\overline{Hcy}$ pour relier d'abord la première mémoire MEM I à l'unité de calcul et la deuxième mémoire MEM II à un bus externe d'entrée-sortie du circuit (BUS E), puis la deuxième mémoire à l'unité de calcul et la première au bus externe BUS E. Les mémoires et l'unité de calcul sont commandées par un séquenceur microprogrammé.

### Unité de Calcul et Mémoire de Travail

L'unité de calcul a un volume de traitement numérique à effectuer qui correspond à 16 fois 32 multiplications et 81 additions pour un bloc de 256 points à traiter.

Avec l'architecture de la figure 4, cela veut dire que ces opérations doivent être effectuées pendant une durée Tb=256 Téch, ce qui revient à 2 multiplications et 6 additions pendant chaque période Téch (74 nanosecondes).

On verra que pour éviter d'utiliser un multiplieur rapide 16x16 bits, on effectuera la multiplication en n'utilisant que des additionneurs et des registres à décalage.

De plus, on choisit de faire travailler le circuit intégré avec une horloge interne (signal Hi) de période moitié de Téch (fréquence de travail 27 MHz) et d'effectuer une multiplication et trois additions à chaque période de l'horloge interne.

L'unité de calcul qui est proposée ici utilise N unités arithmétiques et logiques élémentaires et 2N registres, les unités de calcul travaillant en parallèle pour calculer chacune le résultat d'une opération sur deux valeurs numériques A et B, cette opération étant soit une opération d'addition soit une opération "papillon" telle qu'expliquée en référence à la figure 3.

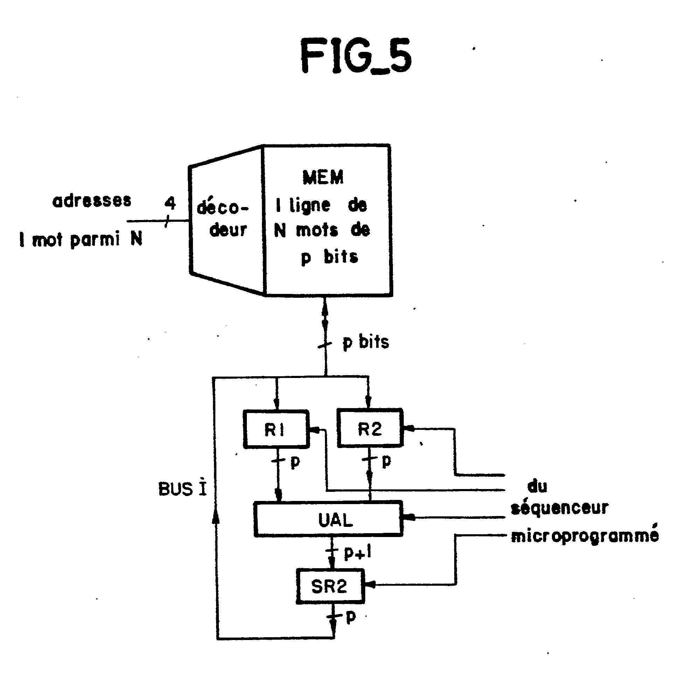

La figure 5 résume la constitution de l'unité de calcul et sa connexion à la mémoire de travail (la mémoire de travail est la première mémoire de la figure 4 pendant Hcy, mais c'est la deuxième mémoire pendant $\overline{Hcy}$).

Plus précisément, on n'a représenté qu'une partie élémentaire de cette constitution, sachant que cette partie élémentaire se répète N fois pour constituer le schéma global de l'unité de calcul et de la mémoire de travail.

Sur la figure 5, la partie élémentaire de l'unité de calcul, associée à une ligne de N mots de la mémoire de travail, comporte : une unité arithmétique et logique UAL capable de travailler sur p+1 bits, p étant la précision interne de calcul (ici, p=16 bits, p+1=17 bits) ; deux registres R1 et R2 de p bits, du type maître-esclave pouvant être accédés simultanément en lecture et en écriture ; un registre à décalage SR2 capable d'effectuer un décalage à droite de deux positions.

L'unité arithmétique et logique opère sur les contenus des registres R1 et R2 et stocke les résultats des opérations soit dans ces registres soit dans la mémoire de travail.

L'unité arithmétique et logique peut effectuer, sous la commande du séquenceur microprogrammé, les opérations suivantes :
- addition des contenus de R1 et R2,

- soustraction des contenus de R1 et R2,
- décalage à gauche du contenu de R1 ou de R2,
- addition de R1 et du contenu décalé à gauche de R2,
- soustraction de R1 et du contenu décalé à gauche de R2,
- lecture du contenu de R1 ou R2.

BUS I est le bus interne mettant en communication la mémoire de travail avec l'unité de calcul, permettant des stockages de résultats intermédiaires ou le chargement des registres avec de nouvelles valeurs.

Afin de réduire le temps de calcul d'une multiplication d'une valeur par un coefficient (multiplication faisant partie du travail exécuté lors d'une opération dite "papillon"), on utilise un codage particulier des coefficients constants $c_r$ servant de multiplicateur.

Le codage choisi est un codage dans lequel chaque coefficient $c_r$, codé à l'origine sur huit bits, est transformé en un nombre codé sur huit chiffres, chaque chiffre pouvant prendre la valeur 0, 1, 2, -1 ou -2 et la valeur du chiffre étant elle-même codée sur 3 bits (par exemple selon le code suivant 000, 001, 010, 101, 110 respectivement pour les chiffres 0, 1, 2, -1, -2).

Les coefficients $c_r$ codés sur 24 bits sont stockés dans une mémoire morte, non représentée sur la figure 5 car elle fait partie du séquenceur microprogrammé qui pilote l'unité de calcul pour exécuter les différentes opérations de l'algorithme de Byeong Gi Lee.

Pour la multiplication d'un nombre A codé sur 16 bits par un coefficient $c_r$ codé sur 24 bits, l'unité arithmétique et logique UAL effectuera la séquence d'opérations suivantes, dans laquelle I est le rang dans l'ordre des poids croissants d'un chiffre $c_{r,I}$ du nombre $c_r$. I varie de 1 à 8 et $c_{r,I}$ a la valeur 0, 1, 2, -1 ou -2 codée sur 3 bits.

Pour I=1 à 8,
- calcul d'un produit partiel $2^{2(I-1)} \times c_{r,I} \times A$ et réalisation d'une somme partielle de rang I qui est l'addition de ce produit partiel et de la somme partielle correspondant au rang I-1, la somme partielle de rang 0 étant prise égale à zéro.

somme partielle (I) = somme partielle (I-1) + $2^{2(I-1)} \times c_{r,I} \times A$

Cet algorithme de multiplication s'exécute de la manière suivante :

Le nombre A est stocké initialement dans le registre R2 tandis que les sommes partielles seront stockées dans R1 (zéro au départ).

La valeur du coefficient $c_{r,I}$, codée sur 3 bits, détermine la configuration de l'unité arithmétique et logique pendant le calcul.

Les configurations de l'UAL sont les suivantes :

$c_{r,I}$ = 1 addition des contenus de R1 et R2, résultat stocké dans R1. Plus brièvement : R1+R2 dans R1.

$C_{r,I}$ = 2 addition du contenu de R1 et du contenu décalé à gauche d'une position de R2, résultat dans R1. Plus brièvement : R1+2R2 dans R1.

$c_{r,I}$ = 0 pas d'opération : R1 dans R1

$c_{r,I}$ = -1 soustraction : R1-R2 dans R1

$c_{r,I}$ = -2 soustraction : R1-2R2 dans R1

Pour chaque valeur de I de 1 à 8, l'UAL prend la configuration correspondant à $C_{r,I}$ et exécute l'opération correspondante ; à la huitième étape, I=8, la multiplication $A \times c_r$ est terminée.

Toutefois, cet algorithme fournirait un résultat valable sur 32 bits ; un résultat valable sur 16 bits (correspondant à la capacité des registres) nécessite de tronquer les résultats des sommes partielles en supprimant les deux derniers bits de chaque somme partielle et en effectuant de plus une extension de signe par l'algorithme suivant :

Pour I=0 à 7, calculer la somme partielle de rang I+1 en ajoutant à la somme partielle de rang I (zéro pour le rang 0) le produit partiel $c_{r,I} \times A$ et en divisant le tout par 4.

La division par 4 est effectuée par un décalage dans le registre SR2 avant le retour dans le registre R1 du résultat de l'addition ci-dessus ; cette addition résulte quant à elle de l'une des cinq configurations possibles de l'UAL décrites ci-dessus en fonction de la valeur du chiffre $c_{r,I}$.

On notera que l'UAL doit pouvoir traiter des nombres de 17 bits pour éviter un débordement dans les cas de multiplication par 2 ($c_{r,I}$=2 ou -2).

En fonction de ces explications on peut résumer ci-dessous les opérations successives de transfert de registre à registre à travers l'UAL pour les deux opération répétitives utilisées dans l'algorithme de Byeong Gi Lee ; A et B sont les contenus de deux adresses de la mémoire de travail.

a) opération d'addition
- transformation aller :
A mis dans R1
B mis dans R2
résultat R1+R2 remis en mémoire de travail à la place de A
- transformation retour :
A mis dans R1

B mis dans R2
résultat R1+R2 remis en mémoire de travail à la place de B
   b) opération "papillon"
   - transformation aller :
A mis dans R1
B mis dans R2 résultat R1+R2 remis en mémoire à la place de A
résultat R1-R2 mis dans R2

$$\frac{1}{4}(R2, c_{r,0}) \text{ mis dans RI}$$

$$\frac{1}{4}(R2, c_{r,1}+R1) \text{ mis dans } R1$$

etc

$$\frac{1}{4}(R2\ c_{r,6}+R1) \text{ mis dans } R1$$

$$(R2\ c_{r,7}+R1) \text{ remis en mémoire à la place de B}$$

   - transformation retour :

$$B \text{ mis dans } R2$$

$$\frac{1}{4}(c_{r,0}\ R2) \text{ mis dans } R1$$

$$\frac{1}{4}(c_{r,1}\ R2+R1) \text{ mis dans } R1$$

etc.
$c_{r,7}R2+R1$ mis dans R2
A mis dans R1
R1+R2 remis en mémoire à la place de A
R1-R2 remis en mémoire à la place de B

On peut vérifier que l'opérateur d'addition utilise 3 cycles d'horloge, que l'opérateur papillon utilise 12 cycles et qu'au total les 32 opérations "papillon" et les 17 opérations d'addition de l'algorithme de Byeong Gi Lee utilisent 435 cycles d'hologe interne, ce qui est inférieur au temps d'échantillonnage des 256 points traités par ces algorithme (512 cycles). Un travail en temps réel est donc possible dans cette architecture où N unités de calcul fonctionnent en parallèle chacune sur une ligne de N points du bloc de N×N points à traiter.

L'architecture du circuit selon l'invention utilise donc 16 ensembles tels que celui de la figure 5 fonctionnant tous simultanément, chacun respectivement sur 16 mots contenus dans une mémoire de travail. Le fonctionnement simultané des 16 unités de calcul implique que ces unités exécutent simultanément tous la même instruction.

Par exemple à un instant donné d'une opération de multiplication, le coefficient multiplicateur $c_r$ est le même pour tous les mots, ce qui veut dire que la configuration de toutes les unités arithmétiques et logiques est la même au même instant.

La série d'instructions à exécuter, est stockée sous forme d'un microprogramme dans une mémoire morte qui est commune pour les 16 unités de calcul et qui contient aussi les coefficients $c_r$ codés sur 24 bits puisque ces coefficients servent à définir la configuration des unités arithmétiques et logiques.

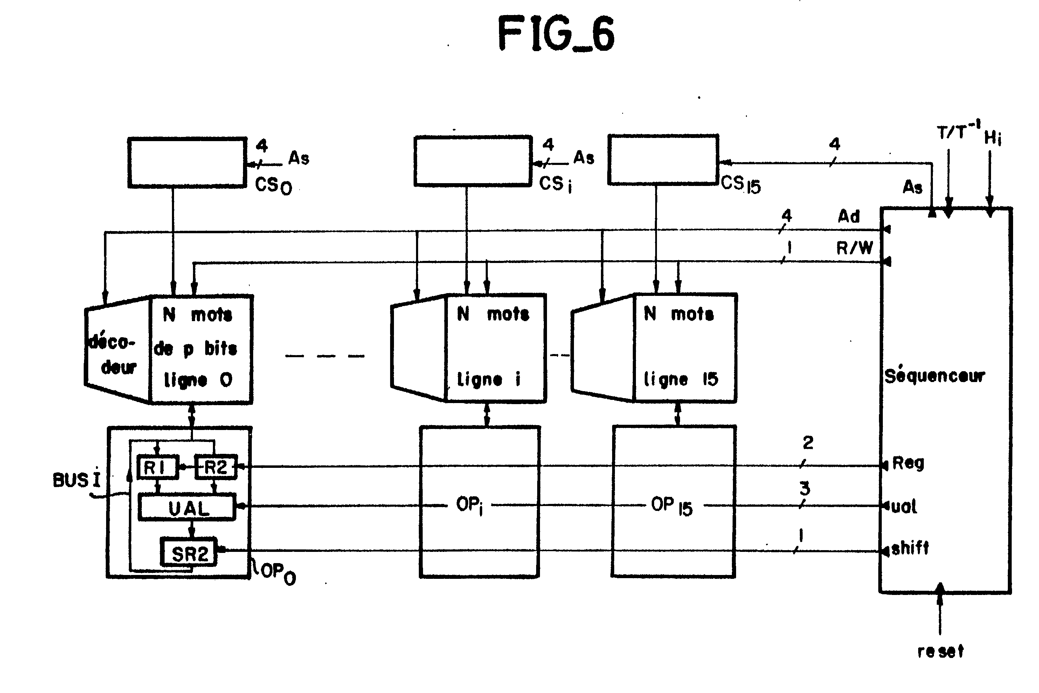

La figure 6 récapitule l'architecture du circuit telle qu'elle existe pendant l'exécution de l'algorithme de Byeong Gi Lee. Sur cette figure, l'ensemble de l'unité arithmétique et logique UAL, des registres R1, R2 et SR2, et du bus BUS I qui les relie entre eux est schématisé par un bloc désigné par la référence OP affecté d'un indice numérique. Il y a 16 blocs identiques $OP_0...OP_i...OP_{15}$ tous pilotés par un séquenceur unique. Chaque bloc est relié à une mémoire de ligne différente ayant 16 positions de mots.

Le séquenceur génère les signaux de commande suivants :
- Ad : Signaux d'adressage des mémoires de travail, sur 4 bits, pour indiquer quel est le mot qui est sélectionné en lecture ou écriture dans les 16 mémoires de travail qui contiennent chacune 16 mots. La même position de mot est sélectionnée pour toutes les mémoires, en tous cas pendant l'exécution de l'algorithme de calcul ; c'est pourquoi les signaux d'adresse Ad sont codés sur 4 bits

- R/W : signal indiquant si le mode d'accès aux mémoires est un mode de lecture ou d'écriture ; ce signal est commun à toutes les mémoires de ligne
- Reg/ual/Shift : signaux codés sur 6 bits pour définir la configuration des unités de calcul ; Reg (2 bits) commande le mode d'accès aux registres R1 et R2 et la sélection du registre R1 ou R2 ; ual (3 bits) définit l'opération effectuée par l'Unité Arithmétique et Logique ; Shift (1 bit) commande le registre SR2

Le séquenceur reçoit en entrée les signaux suivants :
- $T/T^{-1}$ permet de sélectionner soit un microprogramme d'exécution de transformée aller soit un microprogramme d'exécution de transformée retour
- Tlin/Tcol permet de définir si le circuit fonctionne pour une transformation ligne ou pour une transformation colonne
- $H_i$ est l'horloge interne à 27 MHz
- Reset permet le déclenchement et l'initialisation du circuit lors de la mise sous tension.

Enfin, le séquenceur fournit des signaux logiques supplémentaires As codés sur 4 bits dont l'explication détaillée sera donnée plus loin car ces signaux n'ont rien à voir avec le fonctionnement des mémoires en tant que mémoires de travail pendant l'exécution de l'algorithme de calcul ; ils servent lorsque ces mémoires deviennent mémoires tampon pour le déchargement des résultats d'un calcul et le chargement de nouvelles données à traiter, selon le principe d'alternance qui a été expliqué en référence à la figure 4. Disons simplement que les signaux As commandent des circuits de sélection $CS_0$ à $CS_{15}$ associés chacun à l'une des mémoires de ligne pour pouvoir sélectionner soit toutes les mémoires simultanément (pendant l'exécution de l'algorithme de calcul), soit une seule à la fois (pendant le déchargement et le chargement). Le signal Hcy définit si on est dans le premier cas ou le second.

## Mémoire Tampon

Dans l'architecture de circuit selon l'invention, la même mémoire peut servir de mémoire de travail et de mémoire tampon ; la description qui suit montre l'architecture et le fonctionnement de cette mémoire pendant qu'elle sert de mémoire tampon pour le déchargement de résultats de calcul et le chargement de nouvelles données à traiter.

Grâce aux signaux As issus du séquenceur et commandant les circuits de sélection $CS_0$ à $CS_{15}$, on peut accéder à un des blocs de mémoire parmi 16 ; grâce aux signaux Ad également issus du séquenceur, on peut avoir accès à un mot parmi 16 dans la mémoire de ligne sélectionnée.

Les entrées/sorties de données des 16 mémoires sont toutes reliées, pendant que la mémoire sert de mémoire tampon, à un bus de 16 bits (pour des mots de 16 bits) appelé bus externe BUS E parce qu'il permet de transférer vers l'extérieur du circuit intégré, ou de l'extérieur, des données qui sont soit des résultats de calcul soit des données à traiter. Le bus externe BUS E est relié à des circuits d'entrée CIN et des circuit de sortie COUT. Si les circuits d'entrée sont validés le bus reçoit des données ; si les circuits de sortie sont validés le bus fournit des données.

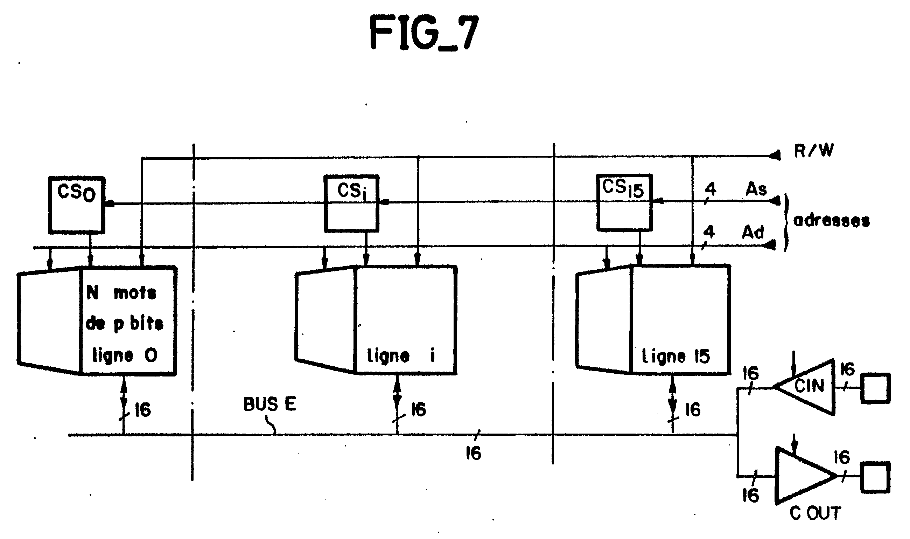

La figure 7 représente l'architecture des 16 mémoires de ligne pendant qu'elles servent de mémoire tampon.

Comme le groupe de mémoires sert à stocker initialement les valeurs des pixels d'un bloc de 16×16 pixels, et que chaque mémoire effectue un traitement sur une ligne de ce bloc, on conçoit qu'il y a une corrélation entre la position (i,j) d'un pixel x(i,j) dans le bloc 16×16 à traiter et les signaux d'adressage As et Ad qui définissent la position physique du mot en mémoire correspondant à ce pixel ; l'adresse As définit la position physique en ligne et l'adresse Ad définit la position en colonne de ce mot.

Mais on verra qu'en pratique, l'ordre des pixels est volontairement brouillé avant introduction dans la mémoire de travail, et que cet ordre est à nouveau modifié entre le moment de l'exécution d'une transformée ligne et le moment de l'exécution d'une transformée colonne, et qu'il est enfin encore modifié avant sortie des résultats de la transformation cosinus. On rappelle à ce sujet ce qui a été dit à propos de l'explication du graphe de l'algorithme de Byeong Gi Lee (figure 1) : la régularité du graphe nécessite que les entrées soient en ordre "brouillé" et les sorties en ordre "inversé". Par conséquent un pixel x(i,j) ne sera pas stocké physiquement à l'intersection de la ligne i et la colonne j.

## Mécanisme d'entrée/sortie des données de la mémoire tampon

Comme on l'a expliqué, la transformation cosinus se fait en deux étapes, transformée ligne, suivie d'une transformée colonne, et par deux circuits intégrés distincts bien qu'identiques. les résultats de la transformée ligne, produits par le premier circuit intégré, sont donc appliqués comme données d'entrée à traiter dans le second circuit intégré.

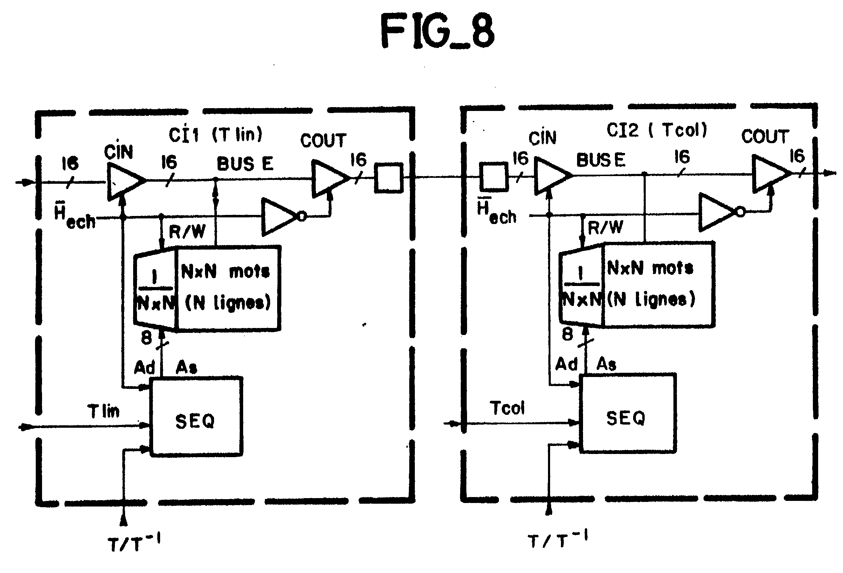

La figure 8 récapitule cette structure à deux circuits intégrés, en ne reprenant toutefois que les éléments utiles à la compréhension du fonctionnement de la mémoire en tant que mémoire tampon et en représentant le groupe de 16 mémoires sous forme d'un bloc unique ayant une entrée d'adressage (8 bits Ad, As), une entrée R/W de mode d'accès, et une entrée/sortie de données reliée au bus externe BUS E.

Le premier circuit intégré, CI1, est sur la partie gauche de la figure 8 ; son séquenceur reçoit un signal de commande Tlin qui lui indique qu'il devra exécuter une transformée ligne ; le deuxième circuit intégré,

CI2, est sur la partie droite ; son séquenceur reçoit un signal Tcol qui lui indique qu'il devra exécuter une transformée colonne.

Le bus externe BUS E du circuit CI1 reçoit de l'extérieur des données par ses circuits d'entrées CIN ; il fournit des données à l'extérieur, et plus précisément à l'entrée du circuit CI2, par ses circuits de sortie COUT.

Les données issues du circuit CI1 sont appliquées aux circuits d'entrée CIN du circuit CI2. Les résultats du calcul de la transformée cosinus sont fournis à l'extérieur par les circuits de sortie COUT du circuit CI2.

Le transfert des données s'effectue mot par mot à la période d'échantillonnage Téch des données à traiter (Téch = 74 nanosecondes). Cette période est définie par un signal $H_{éch}$ de durée 37 nanosecondes et son complément $\overline{H_{éch}}$ de même durée. Cette durée est égale à la période de l'horloge interne Hi du circuit.

Les circuits d'entrée et sortie CIN et COUT sont pourvus chacun d'une entrée de validation, activée pendant que $H_{ech}=1$ pour les circuits de sortie COUT et activée pendant que $H_{ech}=0$ pour les circuits d'entrée CIN. Pendant l'activation, les données appliquées à l'entrée de ces circuits sont transmises à leur sortie où elles restent ensuite en mémoire jusqu'à la période d'échantillonnage suivante.

Ainsi, un échantillon se présente à l'entrée d'un circuit CIN lorsque $H_{ech}=1$ ; une adresse Ad, As est générée par le séquenceur et décodée par le décodeur du plan mémoire et le point correspondant est accédé en lecture par le bus externe (BUS E). Le circuit COUT est alors validé et le mot lu en mémoire est transmis à travers ce circuit à la sortie du circuit intégré et mémorisé sur cette sortie.

Ensuite, pendant que $H_{ech}=0$, les sorties du circuit intégré sont isolées du bus externe BUS E (circuits COUT invalidés) ; les entrées du circuit intégré sont au contraire connectées au bus externe et l'échantillon présenté à l'entrée est écrit en mémoire à l'adresse Ad, As (qui n'a pas changé).

Ainsi, à chaque période d'échantillonnage, une donnée inscrite en mémoire est déchargée du circuit intégré et une nouvelle donnée est inscrite à la même adresse. Après 256 périodes, l'ensemble du plan mémoire a été déchargé et rechargé.

Comme le montre la figure 8, le deuxième circuit intégré reçoit comme nouvelles données à traiter les résultats du calcul effectué par le premier circuit intégré, réalisant ainsi la double sommation désirée (transformation ligne, suivie d'une transformation colonne).

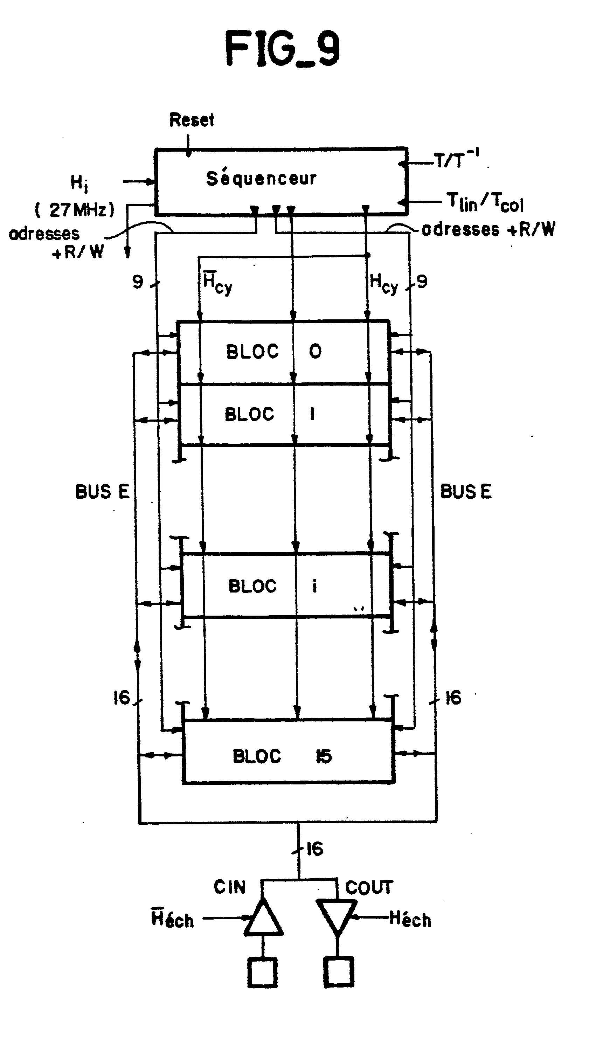

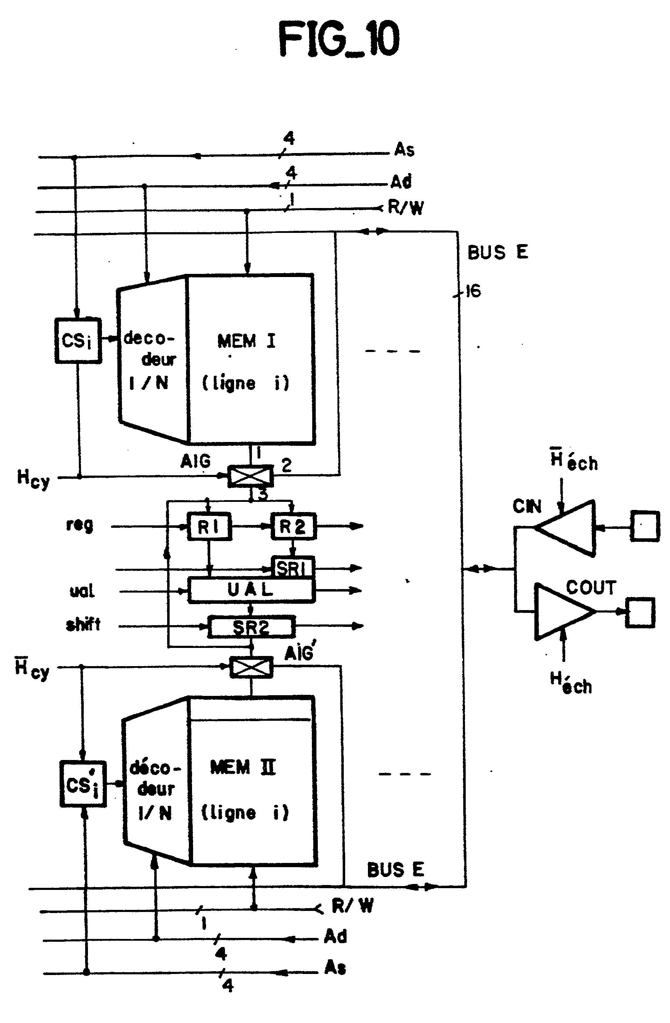

Les figures 9 et 10 qui suivent récapitulent l'architecture globale du circuit intégré destiné à faire la transformation ligne ou colonne (aller ou retour). La figure 9 est un schéma d'ensemble montrant le séquenceur et les 16 blocs commandés en parallèle par ce séquenceur. La figure 10 représente le schéma détaillé d'un bloc qui comprend deux mémoires de ligne travaillant alternativement comme mémoire tampon et comme mémoire de travail, et une unité de calcul couplée alternativement à l'une puis à l'autre de ces mémoires.

Sur la figure 9 on retrouve le séquenceur déjà largement expliqué en référence à la figure 6 à propos du fonctionnement des mémoires pendant le calcul.

Aux explications déjà données il faut rajouter les détails suivants : le séquenceur reçoit un signal d'entrée $T_{lin}/T_{col}$ indiquant si la transformée à exécuter est une transformée ligne ou une transformée colonne ; d'autre part, le séquenceur possède deux bus de sortie de 8 bits chacun définissant des adresses indépendantes pour les deux groupes de mémoires travaillant en alternance ; il possède aussi deux sortie R/W définissant le mode d'accès (lecture ou écriture) de chacun des groupes de mémoires. Enfin, le séquenceur fournit un signal Hcy et son complément $\overline{Hcy}$ pour définir l'alternance de fonctionnement des groupes de mémoires (cf. figure 4).

Sur la figure 9, les blocs sont désignés respectivement par BLOC 0, BLOC 1,... BLOCi,..., BLOC 15.

Sur la figure 10 est représentée la constitution d'un bloc avec son unité de calcul telle qu'expliquée en référence aux figures 5 et 6, cette unité de calcul étant cependant reliée non pas à une seule mémoire de 16 mots mais alternativement à deux mémoires. Pendant que l'une des mémoires est couplée à l'unité de calcul (ceci a lieu pendant que Hcy=1, soit pendant une durée de 256 périodes d'échantillonnage Téch), l'autre est couplée au bus externe BUS E. Et réciproquement pendant que Hcy=0. Deux aiguillages AIG et AIG' commandés l'un par Hcy et l'autre par $\overline{Hcy}$ établissent les couplages désirés. Ces aiguillages correspondent, sous une autre représentation, aux transistors visibles à la figure 4.

Enfin, notons que parmi les deux mémoires du bloc de la figure 10, celle qui fonctionne en mémoire tampon doit pouvoir être sélectionnée individuellement, indépendamment des mémoires tampons des autres blocs, par l'application d'une adresse de ligne As issue du séquenceur (cf. explication relative à la figure 7) ; mais la mémoire qui fonctionne en mémoire de travail couplée à l'unité de calcul est adressée globalement, c'est-à-dire que les mémoires de travail de tous les blocs sont adressées simultanément et reçoivent une même adresse de mot Ad issue du séquenceur (cf. explication relative à la figure 6).

C'est pourquoi le circuit de sélection associé à chaque mémoire de ligne, reçoit non seulement l'adresse de ligne As, mais aussi un signal de commande qui est le signal Hcy pour l'une des mémoires du bloc et le signal $\overline{Hcy}$ pour l'autre ; le fonctionnement est le suivant, à l'intérieure du BLOC i :

- pour la mémoire MEM I (ligne i) qui fonctionne comme mémoire de travail pendant que Hcy=1, le circuit de sélection CS$_i$ relatif à la ligne i sélectionne la mémoire dès lors que Hcy=1 indépendamment de l'adresse de ligne As ; mais si Hcy=0 il sélectionne la mémoire seulement si l'adresse de ligne As fournie par le séquenceur correspond bien à la ligne i

- pour la mémoire MEM II (ligne i) qui fonctionne comme mémoire de travail pendant que $\overline{\text{Hcy}}$=1, le circuit de sélection CS'$_i$ relatif à la ligne i sélectionne la mémoire dès lors que $\overline{\text{Hcy}}$=1 indépendamment de l'adresse de ligne As ; mais si $\overline{\text{Hcy}}$=0, il sélectionne la mémoire seulement si l'adresse de ligne As fournie par le séquenceur correspond bien à la ligne i.

L'adresse du mot est dans tous les cas l'adresse Ad fournie par le séquenceur ; les adresses Ad, As (8 bits) ainsi que le mode d'accès R/W (lecture ou écriture) sont fournis indépendamment pour les deux mémoires (deux bus de 9 bits distincts sont issus du séquenceur).

<u>Stockage des points dans la mémoire ; générateur d'adresses</u>

On rappelle que l'algorithme de la transformée ligne de Byeong Gi Lee est régulier si les 16 points de la mémoire ligne sont stockés dans la mémoire de travail dans un ordre différent de l'ordre naturel, que l'on appelle "ordre brouillé". De plus, les résulltats apparaissent alors dans un ordre dit "ordre inversé"
ordre naturel dans une ligne de mémoire :
0 1 2 3 4 5 6 7 8 9 10 11 12 13 14 15
ordre brouillé dans une ligne de mémoire :
0 1 3 2 7 6 4 5 15 14 12 13 8 9 11 10
ordre inversé dans une ligne de mémoire :
0 8 4 12 2 10 6 14 1 9 5 13 3 11 7 15
L'ordre des mots subit ces deux bouleversements successifs lors de la transformée ligne aller.
Réciproquement, lors d'une transformée ligne retour, l'ordre des mots doit être transformé, à supposer qu'on parte d'un ordre naturel, en un ordre <u>inversé</u>, puis les résultats apparaissent en un ordre brouillé qu'il faut rétablir en ordre naturel.
Le rangement des données dans la mémoire de ligne n'est donc pas quelconque.
Or, physiquement, la mémoire de travail et la mémoire tampon recevant les données sont une seule et même mémoire.
C'est une fonction d'un générateur d'adresses, contenu dans le séquenceur, que d'assurer un rangement convenable des données à traiter dans la mémoire tampon qui deviendra ensuite mémoire de travail.
Notons i- la fonction de brouillage transformant l'ordre naturel des indices de ligne i en un ordre brouillé.
Notons i+ la fonction d'inversion assurant la transformation des indices de ligne i d'un ordre naturel vers un ordre inversé. La particularité de cette fonction de transformation est que si elle est exécutée à nouveau on revient à l'ordre naturel : i++=i.
Pour une transformée cosinus aller (transformée ligne suivie d'une transformée colonne), partant d'une donnée (pixel) x(i,j) d'adresse (i,j) du bloc 16×16 représentant l'image à traiter, on va ranger dans la mémoire tampon du premier circuit intégrés CI1 (cf figure 8) qui assure la transformée ligne, la donnée x(i,j) à l'adresse (i,j-), c'est-à-dire que la ligne i sera rangée avec ses mots d'indice j en ordre brouillé.
Le traitement par l'algorithme de Byeong Gi Lee sera effectué sur toutes les lignes simultanément et les résultats se rangeront, pour chaque ligne, dans l'ordre inversé (i,j+).
On va alors introduire ces résultats dans la mémoire tampon du deuxième circuit intégré CI2, à titre de données à traiter ; colonne par colonne (puisqu'il faut faire une transformée colonne), mais dans l'ordre brouillé et chaque colonne brouillée étant rangée dans une <u>ligne</u> de mémoire.
Cela veut dire qu'à ce stade, un résultat C$^i$(v) de la transformée ligne, ayant théoriquement l'indice de ligne i et l'indice de colonne v, mais stocké en fait à l'adresse d'ordre inversé (i,v+) doit être stocké dans la mémoire tampon du deuxième circuit intégré à l'adresse (v,i-). Puis, le calcul effectué fournira des résultats en ordre inversé et en ligne au lieu d'être en colonne, c'est-à-dire qu'un résultat C(u,v) sera alors rangé à l'emplacement d'adresse (v,u+) au lieu de (u,v).
On voit donc l'importance du générateur d'adresses du séquenceur et on voit enparticulier que les séquences d'adresses fournies à la mémoire tampon lors du stockage de données et du déstockage de résultats de calcul dépendront étroitement du fait que le circuit intégré fonctionne en transformateur ligne ou en transformateur colonne.

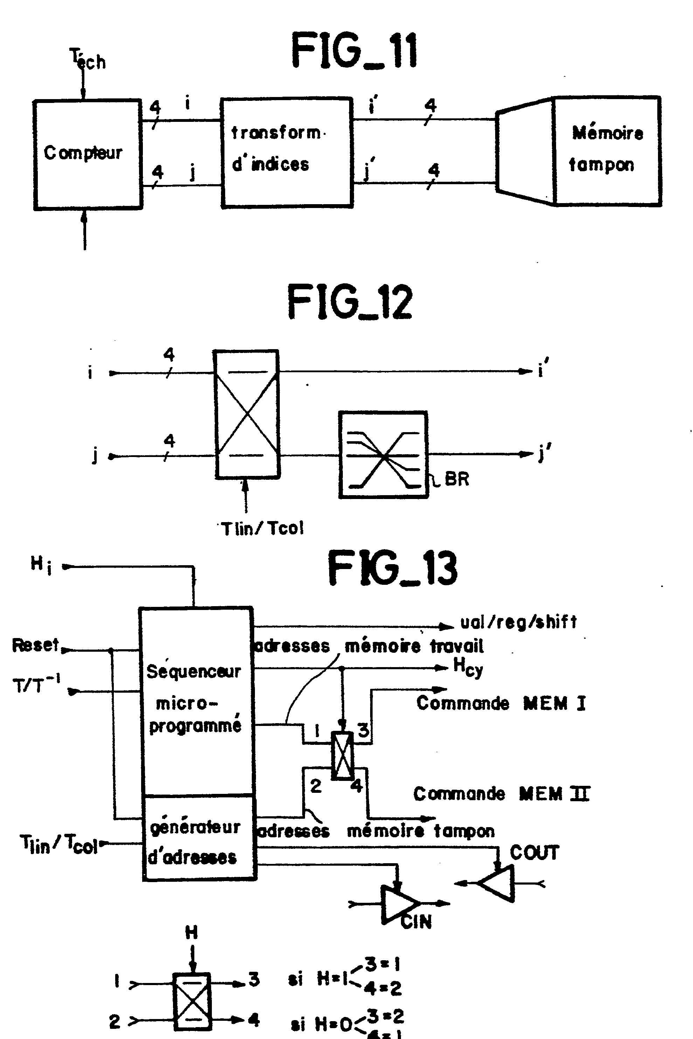

La figure 11 représente un schéma synoptique de ce générateur d'adresses. Il comprend un compteur à 256 positions qui compte de manière continue à la fréquence d'échantillonnage des pixels (période Téch), suivi d'un transformateur d'indices qui exécute des permutations d'indices de ligne et de colonne, ainsi que les fonctions de brouillage et d'inversion des indices de ligne. Ce transformateur d'indices est sous le contrôle du signal Tlin/Tcol qui définit la transformée à exécuter.
Le compteur fournit 8 bits dont 4 représentent un indice de ligne i et 4 un indice de colonne j. Ces 8 bits sont transformés en 8 autres bits dont 4 représentent un indice i' transformé et 4 représentent un indice de colonne transformé j', les indices i' et j' servant de signaux d'adressage (Ad, As) de ligne et de colonne respectivement pour la mémoire tampon.

Par exemple, si on doit effectuer un stockage, à partir de l'ordre naturel, dans un ordre brouillé en ligne le transformateur d'indices exécutera la transformation suivante
i'=i
j'=j-

Autre exemple : si les indices sont initialement en ordre inversé en ligne et qu'ils doivent être stockés en ordre brouillé avec permutation ligne colonne, le transformateur d'indice exécutera la transformation :
i'=j+
j'=i-
(utilisant le fait que l'on passe de l'ordre inversé à l'ordre naturel par la même transformation, notée i+, que pour passer de l'ordre naturel à l'ordre inversé).

Plusieurs possibilités de mise en oeuvre existent alors.

La mise en oeuvre la plus immédiate consisterait à recevoir les données x(i,j), à les stocker dans la mémoire tampon du premier circuit intégré dans un ordre brouillé en ligne, c'est-à-dire que x(i,j) est stocké à l'adresse (i,j-). Le calcul de la transformée ligne fournit alors des coefficients $C^i(v)$ stockés à des emplacement en ordre inversé : $C^i(v)$ est stocké à l'adresse (i,v+). On transfère alors ces résultats, comme données à traiter, dans la mémoire tampon du deuxième circuit intégré, mais en effectuant d'abord un rétablissement des coefficients dans un ordre naturel (transformation d'indice : (i',j')=(i,j+), ainsi qu'une permutation (i',j')=(j,i), ainsi qu'une transformation d'indice de l'ordre naturel vers un ordre brouillé (i',j')=(i,j-). Au total une triple transformation qui réalise (i',j')=(j+,i-) et qui stocke le coefficient Ci(v) à un emplacement (v,i-). Le calcul de la transformée colonne fournit alors des coefficients C(u,v) stockés en ordre inversé c'est-à-dire à l'adresse (v,u+). Une transformation (i',j')=(i,j+) suivie d'une permutation (i',j')=(j,i) les rétablit dans l'ordre naturel, u étant bien l'indice de ligne et v l'indice de colonne.

Une autre possibilité de mise en oeuvre plus intéressante consiste à faire un brouillage et une inversion de bits, aussi bien en ligne qu'en colonne, avant d'introduire les données à traiter dans la mémoire tampon. Cette quadruple modification d'ordre (brouillage, inversion, en ligne, en colonne) se fait en présentant à l'entrée du premier circuit intégré, en vue de la transofrmation ligne, non pas les données x(i,j) dans l'ordre naturel x(0,0), x(0,1)...x(15,15), du bloc de données à traiter, mais dans un ordre très différent qui est l'ordre naturel du bloc matriciel obtenu après le quadruple transformation d'indices suivante :
(i',j')= (i-+, j-+)

Autrement dit, pour présenter les données à traiter, on balaye le bloc de données x(i,j) dans un ordre très particulier.

On stocke alors la donnée x(i-+, j-+) à l'adresse physique (i,j+). Cela veut dire que le générateur d'adresses établit des adresses successives de stockage en balayant les indices (i,j) dans l'ordre naturel (simple comptage par le compteur de la figure 11) et en leur faisant subir la transformation d'indices
(i',j')=(i,j+)

Si x(i-+,j-+) est stocké à l'adresse (i, j+), cela revient à dire que les données x(i-+,j) sont stockées sur la ligne i dans un ordre brouillé.

Le calcul de la transformée ligne est effectué ligne par ligne sur ces données et aboutit à des coefficients $C^{i-+}(v)$ qui apparaissent sur la ligne i dans un ordre inversé. Cela veut dire que le coefficient $C^{i-+}(v)$ apparait à l'emplacement physique (i,v+).

Ces coefficients doivent être transférés de la mémoire (agissant alors comme mémoire tampon) du premier circuit intégré dans celle du deuxième, en vue d'exécuter la transformée colonne.

Mais on lit la mémoire du premier circuit intégré dans un ordre qui n'est pas l'ordre naturel : on fait une inversion d'indice de ligne grâce au générateur d'adresses qui transforme l'ordre inversé en ligne en un ordre naturel par la transformation suivante :
(i',j')= (i,j+)

Les coefficients $C^{i-+}(v)$ sortent alors de la mémoire du premier circuit intégré comme s'ils étaient stockés en ordre naturel sur la ligne i.

Ils sont présentés dans cet ordre naturel au deuxième circuit intégré, mais le générateur d'adresses de celui-ci effectue une nouvelle transformation d'indices qui consiste d'une part en une permutation d'indices de ligne et colonne et d'autre part en une inversion d'ordre en ligne après cette permutation ; la transformation d'indices s'écrit
(i',j')=(j,i+)

Il en résulte que le coefficient $C^{i-+}(v)$ est stocké à l'adresse physique (v,i+), et cela veut dire en pratique que les coefficients $C^i(v)$ sont stockés en ordre brouillé sur la ligne v.

Le calcul de la transformée colonne, effectué ligne par ligne, conduit à des coefficients C(u,v) qui apparaissent sur la ligne v dans un ordre inversé. Cela veut dire que le coefficient C(u,v) apparait à l'adresse physique (v,u+).

Lorsque le calcul est terminé et que la mémoire du deuxième circuit intégré joue le rôle de mémoire tampon en vue du déchargement des résultats du calcul, on utilise encore le générateur d'adresses pour effectuer une nouvelle transformation d'indices consistant en une inversion de l'ordre des adresses en ligne, et en une permutation des indices de ligne et colonne, de sorte que les résultats sortent de la mémoire tampon comme s'ils y étaient stockés en ordre naturel. La transformation d'indices est encore :
(i',j')=(j,i+)

Ainsi, il est remarquable de constater que si l'on introduit les données en ordre inversé-brouillé en ligne et colonne x(i-+,j-+), les résultats du calcul sortent en ordre naturel C(u,v) et le générateur d'adresses n'accomplit que deux types de transformation d'indices :
(i′,j′)=(i,j+) pour la transformation ligne, aussi bien au moment du stockage de données dans la mémoire tampon qu'au moment du déstockage, et
(i′,j′)=(j,i+) pour la transformation colonne, aussi bien au stockage qu'au déstockage.

On monterait facilement que le fonctionnement est le même pour exécuter une transformée cosinus retour : on présente les coefficients C(u,v) à traiter dans un ordre naturel, le circuit de transformée ligne les stocke en ordre inversé en ligne, les déstocke également en ordre à nouveau inversé, le circuit de transformée colonne les stocke après permutation et inversion en ligne, et les déstocke à nouveau avec permutation et inversion en ligne, de sorte que les valeurs numériques x(i,j) issues de la transformée cosinus retour apparaissent en sortie dans un ordre très particulier qui est l'ordre du bloc x(i-+,j-+) ; c'est le même que celui qui a été utilisé pour présenter les données à l'entrée de la transformée cosinus aller.

Il résulte de tout cela que l'on peut utiliser une structure de générateur d'adresses conforme à la figure 11 et qui comporte un transformateur d'indices particulièrement simple.

La figure 12 représente cette structure qui comporte un aiguillage permettant de permuter ou non les indices de ligne i et les indices de colonne j selon qu'on effectue une transformée colonne ou une transformée ligne, cet aiguillage étant suivi d'un circuit d'inversion BR qui modifie l'ordre des bits en colonne pour les placer en ordre inversé.

Le circuit d'inversion BR est simplement réalisé par routage car le principe de l'inversion de l'ordre consiste simplement à lire les bits dans l'ordre de poids croissants au lieu de l'ordre décroissant : une adresse de 4 bits ($a_3$, $a_2$, $a_1$, $a_0$), où les poids forts sont à gauche, deviendra l'adresse ($a_0$, $a_1$, $a_2$, $a_3$).

On a ainsi décrit l'essentiel de la structure du circuit intégré selon l'invention, mais pour plus de clarté on a représenté à la figure 13 la structure globale du séquenceur avec le générateur d'adresses qui vient d'être décrit. Le séquenceur est en effet composé de deux parties, d'une part le générateur de signaux de commande de la mémoire de travail et de l'unité de calcul avec laquelle cette mémoire est en relation, et d'autre part le générateur de signaux de commande de la mémoire tampon et des circuits d'entrée/sortie CIN, COUT.

Les signaux de commande de la mémoire tampon viennent du générateur d'adresses comme on vient de l'expliquer ; les signaux de commande de la mémoire de travail et de l'unité de calcul sont établis par les microprogrammes de la mémoire morte du séquenceur.

Un aiguillage est prévu dans le séquenceur pour permuter les commandes des deux plans mémoires MEM I et MEM II lorsque ces plans mémoires changent de rôle toutes les 256 périodes d'échantillonnage.

Il faut noter que le circuit qui a été ainsi décrit peut être utilisé pour exécuter d'autres transformations linéaires que la transformation cosinus, pourvu que ces transformations utilisent essentiellement des multiplications de données par des coefficients constants.

## Revendications

1. Circuit intégré de traitement numérique de signaux, destiné à recevoir des signaux représentant des valeurs numériques : x(i,j) et à produire des signaux représentant des coefficients $C^i(v)$ de la forme

$$C^i(v) = \sum_{j=0}^{N-1} x(i,j) \cos\frac{2j+1}{2N} v\pi$$

où i,j représentent des indices de ligne et de colonne d'une matrice de N×N valeurs numériques x(i,j), et i et v représentent des indices de ligne et de colonne d'une matrice de N×N coefficients $C^i(v)$, caractérisé en ce qu'il comporte deux mémoires de N lignes de N mots (MEM I, MEM II), N unités de calcul ($OP_0$ à $OP_{15}$) couplées chacune alternativement à une ligne d'une mémoire puis à une ligne correspondante de l'autre mémoire, avec un séquenceur commun pour commander simultanément et de la même manière les N unités de calcul, le séquenceur étant agencé pour faire fonctionner alternativement les deux mémoires de la manière suivante :
- dans une première alternance l'une des mémoires sert de mémoire de travail contenant initialement N×N données x(i,j) à traiter, les unités de calcul effectuent des calculs identiques chacune sur une ligne de N données, pour aboutir à N×N résultats de calcul qui sont placés dans cette mémoire, et, simultanément, l'autre mémoire sert de mémoire tampon qui est commandée pour assurer le déchargement de résultats de calcul qu'elle contient et le chargement de nouvelles données à traiter
- dans une seconde alternance les rôles des mémoires sont inversés.

2. Circuit intégré selon la revendication 1, caractérisé en ce que les mémoires sont adressées par le séquenceur à travers un décodeur permettant d'accéder soit à un mot unique d'adresse de ligne As et d'adresse de colonne Ad, lorsque la mémoire fonctionne en mémoire tampon, soit simultanément à N mots d'adresse de colonne Ad lorsque la mémoire fonctionne en mémoire de travail.

3. Circuit intégré selon la revendication 1, caractérisé en ce que chaque unité arithmétique et logique est apte à effectuer une addition de deux nombres et une multiplication d'un nombre par un coefficient.

4. Circuit intégré selon la revendication 1, caractérisé en ce qu'il est apte à effectuer soit une transformation aller permettant d'obtenir des coefficients $C^i(v)$ à partir des données $x(i,j)$, soit une transformation retour permettant d'obtenir des valeur $x(i,j)$ à partir d'un bloc de N×N coefficients $C^i(v)$, le circuit comportant une borne de commande recevant un signal logique $(T/T^{-1})$ indiquant quel type de transformation doit être effectuée.

5. Circuit selon la revendication 1, caractérisé en ce que le séquenceur comporte un générateur d'adresses destiné à établir une séquence particulière d'ordre de lecture ou d'écriture des N×N mots de la mémoire tampon, la séquence de lecture ou d'écriture étant modifiée par une borne de sélection ligne/colonne du circuit intégré, cette borne recevant un signal (Tlin/Tcol) permettant de sélectionner un stockage des valeurs numériques $x(i,j)$ soit en ligne soit en colonne, c'est-à-dire qu'une ligne de la mémoire tampon recevra soit une ligne de données $x(i,j)$ soit une colonne de données $x(i,j)$.

6. Circuit selon la revendication 5, caractérisé en ce que le générateur d'adresses comprend un compteur à N×N positions fournissant des sorties de poids fort représentent un indice de ligne et des sorties de poids faible représentant un indice de colonne, et un transformateur d'indices recevant les sorties du compteur et effectuant l'une des deux transformations suivantes selon l'état de la borne de sélection ligne/colonne :
- les sorties de poids fort sont inchangées, les sorties de poids faible sont placées en ordre de bits inversé,
- les sortie de poids fort sont permutées avec les sorties de poids faible, et les sorties devenues poids faibles sont placées en ordre de bit inversé.

7. Circuit de traitement numérique de signaux, destiné à recevoir des signaux représentant des coefficients $x(i,j)$ et à produire des coefficients $C(u,v)$ qui sont obtenus par une transformation ligne produisant des coefficients :

$$C^i(v) = \sum_{j=0}^{N-1} x(i,j) \cos\frac{2j+1}{2N}v\pi$$

suivi d'une transformée colonne produisant des coefficients :

$$C(u,v) = \sum_{i=0}^{N-1} C^i(v) \cos\frac{2i+1}{2N}u\pi$$

où $i,j$ représentent des indices de ligne et de colonne d'une matrice de N×N valeurs numériques $x(i,j)$, $i$ et $v$ représentent des indices de ligne et de colonne d'une matrice de N×N coefficients intermédiaires $C^i(v)$, et $u$ et $v$ représentent des indices de ligne et de colonne d'une matrice des N×N coefficients $(Cu,v)$, caractérisé en ce qu'il comporte, en cascade, deux circuits intégrés identiques selon l'une des revendications 1 à 6, le deuxième circuit intégré recevant comme signaux de données à traiter les signaux représentant les coefficients calculés par le premier circuit, les circuits comportant une borne de sélection ligne/colonne et recevant sur cette borne des états logiques complémentaires afin que le premier circuit exécute une transformée ligne pendant que le deuxième circuit exécute une transformée colonne.

## Patentansprüche

1. Integrierte Schaltung zum numerischen Verarbeiten von Signalen, die Signale, welche numerische Werte: $x(i,j)$ darstellen, empfängt und Signale erzeugt, welche Koeffizienten $C^i(v)$ der Form

$$C^i(v) = \sum_{j=0}^{N-1} x(i,j) \cos\frac{2j+1}{2N}v\pi$$

darstellen, wobei $i,j$ Zeilen- und Spaltenindizes einer Matrize mit NxN numerischen Werten $x(i,j)$ darstellen und $i$ und $v$ Zeilen- und Spaltenindizes einer Matrize mit NxN Koeffizienten $C^i(v)$ darstellen, dadurch gekennzeichnet, daß sie zwei Speicher mit N Zeilen und N Worten (MEM I, MEM II) und N Recheneinheiten ($OP_0$–$OP_{15}$) umfaßt, die jeweils abwechselnd an eine Zeile des einen Speichers und dann an eine entsprechende Zeile des anderen Speichers angeschlossen sind, mit einem gemeinsamen Zuordner zum gleichzeitigen und gleichartigen Ansteuern der N Recheneinheiten, wobei der Zuordner dazu ausgelegt ist, die beiden Speicher abwechselnd in der folgenden Weise zu betreiben:

14

– in der ersten Halbperiode dient einer der Speicher als Arbeitsspeicher, welcher ursprünglich NxN zu bearbeitende Daten x(i,j) beinhaltet, wobei die Recheneinheiten jeweils identische Berechnungen bezüglich einer Zeile von N Daten ausführen, um NxN Rechnerergebnisse zu erhalten, welche in dem Speicher abgelegt werden, wobei gleichzeitig der andere Speicher als Pufferspeicher dient, welcher angesteuert wird, um das Auslesen der Rechenresultate, die er entält, und das Laden neuer zu bearbeitender Daten sicherzustellen,
– in der zweiten Halbperiode sind die Rollen der Speicher umgekehrt.

2. Integrierte Schaltung nach Anspruch 1, dadurch gekennzeichnet, daß die Speicher von dem Zuordner über einen Decoder adressiert werden, der Zugriff entweder auf ein einzelnes Wort einer Zeilenadresse As und einer Spaltenadresse Ad, wenn der Speicher als Pufferspeicher dient, oder gleichzeitig auf N Worte der Spaltenadresse Ad erlaubt, wenn der Speicher als Arbeitsspeicher dient.

3. Integrierte Schaltung nach Anspruch 1, dadurch gekennzeichnet, daß jede arithmetische und logische Einheit dazu in der Lage ist, zwei Zahlen miteinander zu addieren und eine Zahl mit einem Koeffizienten zu multiplizieren.

4. Integrierte Schaltung nach Anspruch 1, dadurch gekennzeichnet, daß sie dazu ausgelegt ist, entweder eine Vorwärtstransformation auszuführen, welche es erlaubt, Koeffizienten $C^i(v)$ aus den Daten x(i,j) zu gewinnen, oder eine Rücktransformation auszuführen, die es erlaubt, Werte x(i,j) aus einem Block von NxN Koeffizienten $C^i(v)$ zu gewinnen, wobei die integrierte Schaltung einen Steueranschluß aufweist, der ein logisches Signal $(T/T^{-1})$ empfängt, welches anzeigt, welche Transformationsart ausgeführt werden soll.

5. Schaltung nach Anspruch 1, dadurch gekennzeichnet, daß der Zuordner einen Adressengenerator umfaßt, zum Erzeugen einer bestimmten Folge von Lese- oder Schreibvorgängen bezüglich der NxN Worte des Pufferspeichers, wobei die Folge der Lese- oder Schreibvorgänge mittels eines Auswählanschlusses bezüglich Zeilen/Spalten der integrierten Schaltung modifiziert wird, wobei dieser Anschluß ein Signal (Tlin/Tcol) empfängt, das es ermöglicht, ein Speichern der numerischen Werte x(j,i) entweder in Zeilen oder in Spalten auszuwählen, d.h., daß eine Zeile des Pufferspeichers entweder eine Zeile der Daten x(i,j) oder eine Spalte der Daten x(i,j) empfängt.

6. Schaltung nach Anspruch 5, dadurch gekennzeichnet, daß der Adressengenerator umfaßt: einen NxN-Zähler, der hochwertige Ausgangssignale, welche einen Zeilenindex darstellen, und niederwertige Ausgangssignale abgibt, welche einen Spaltenindex darstellen, und einen Indextransformator, der die Ausgangssignale des Zählers empfängt und je nach Zustand des Anschlusses für die Zeilen/Spaltenauswahl eine der beiden folgenden Transformationen ausführt:
– die hochwertigen Ausgangssignale werden nicht verändert, die niederwertigen Ausgangssignale werden in umgekehrter Bitfolge angeordnet,
– die hochwertigen Ausgangssignale werden mit den niederwertigen Ausgangssignalen vertauscht und die resultierenden niederwertigen Ausgangssignale werden in umgekehrter Bitfolge angeordnet.

7. Schaltung zum numerischen Verarbeiten von Signalen, die Signale empfängt, welche Koeffizienten x(i,j) darstellen, und Koeffizienten C(u,v) erzeugt, welche durch eine Zeilentransformation gewonnen werden, wodurch folgende Koeffizienten gewonnen werden:

$$C^i(v) = \sum_{j=0}^{N-1} x(i,j) \cos\frac{2j+1}{2N} v\pi$$

gefolgt von einer Spaltentransformation, welche die folgenden Koeffizienten erzeugt:

$$C(u,v) = \sum_{i=0}^{N-1} C^i(v) \cos\frac{2i+1}{2N} u\pi$$

wobei i,j Zeilen- und Spaltenindizes einer Matrize mit NxN numerischen Werten x(i,j), i und v Zeilen- und Spaltenindizes einer Matrize mit NxN Zwischenkoeffizienten $C^i(v)$ und u und v Zeilen- und Spaltenindizes einer Matrize mit NxN Koeffizienten C(u,v) darstellen, dadurch gekennzeichnet, daß sie zwei in Form einer Kaskade verschaltete identische integrierte Schaltungen nach einem der Ansprüche 1 bis 6 umfaßt, wobei die zweite integrierte Schaltung als Signale der zu verarbeitenden Daten diejenigen Signale empfängt, welche die von der ersten Schaltung berechneten Koeffizienten darstellen, die Schaltungen einen Zeilen/Spalten-Auswählanschluß umfassen und an diesem Anschluß komplementäre logische Zustände aufnehmen, so daß die erste Schaltung eine Zeilentransformation ausführt, während die zweite Schaltung eine Spaltentransformation ausführt.

EP 0 254 628 B1

## Claims

1. An integrated circuit for processng digital signals, designed to receive signals representing digital values, x(i,j), and to supply signals representing coefficients $C^i(v)$ of the form

$$ C^i(v) = \sum_{j=0}^{N-1} x(i,j) \cos \frac{2j+1}{2N} v\pi $$

where, i,j represent line and column indexes of a matrix of NxN digital values x(i,j) and i and v represent line and column indexes of a matrix comprising NxN coefficients $C^i(v)$, characterized in this that it comprises two memories of N lines of N words (MEM I, MEM II), calculation units (OP$_0$–OP$_{15}$) each of which being alternatively coupled to a line of one memory then to a corresponding line of the other memory, with a common sequencer for simultaneously and identically controlling N calculation units, the sequencer being arranged so as to alternatively operate both memories as follows:
   – in a first half-period, one of the memories serves as a work memory initially containing NxN data x(i,j) to be processed, each of the calculation units carrying out identical calculations on an N-data line, to produce NxN calculation results which are entered in this memory, and, simultaneously, the other memory serves as a buffer memory which is controlled to unload the calculation results it contains and load new data to be processed;
   – in a second half-period, the memory roles are changed over.

2. An integrated circuit according to claim 1, characterized in this that the memories are addressed by the sequencer through a decoder permitting to access either a single word of line address As and column address Ad, when the memory operates as a buffer memory, or simultaneously N words of column address Ad when the memory operates as a work memory.

3. An integrated circuit according to claim 1, characterized in this that each arithmetic and logic unit is capable of adding two numbers and multiplying a number by a coefficient.

4. An integrated circuit according to claim 1, characterized in this that it is capable of carrying out either and onward transformation permitting to obtain coefficients $C^i(v)$ from data x(i,j), or a return transformation permitting to obtain values x(i,j) from a block of NxN coefficients $C^i(v)$, the circuit comprising a control terminal receiving a logic signal $(T/T^{-1})$ indicating the type of transformation to be carried out.

5. An integrated circuit according to claim 1, characterized in this that the sequencer comprises an address generator for establishing a specific sequence of read/write orders of the NxN words of the buffer memory, the read/write sequence being modified by a line/column selection terminal of the integrated circuit, said terminal receiving a signal (Tlin/Tcol) permitting to select storage of the digital values x(i,j), either in line or in column, that is, a buffer memory line will receive either a data line x(i,j) or a data column x(i,j).

6. An integrated circuit according to claim 5, characterized in this that the address generator comprises a counter with NxN positions supplying high order outputs representing a line index and low order outputs representing a column index, and an index transformer receiving the counter outputs and carrying out one of the two following transformations according to the state of the line/column selection terminal:
   – high order outputs are unvaried, low order outputs are arranged according to reverse bit order.
   – high order outputs are interchanged with low order outputs, and the new low order outputs are arranged according to reverse bit order.

7. A signal digital processing circuit designed to receive signals representing coefficients x(i,j) and to supply coefficients C(u,v) which are obtained through line transformation supplying coefficients:

$$ C^i(v) = \sum_{j=0}^{N-1} x(i,j) \cos \frac{2j+1}{2N} v\pi $$

followed by a column transform supplying coefficients:

$$ C(u,v) = \sum_{j=0}^{N-1} C^i(v) \cos \frac{2i+1}{2N} u\pi $$

where i,j represent line and column indexes of a matrix of NxN coefficients x(i,j), i and v representing line and column indexes of a matrix of NxN itnermediate coefficients $C^i(v)$, and u and v represent line and column indexes of a matrix of NxN coefficients C(u,v), characterized in this that it comprises two cascade

16

connected and identical integrated circuits according to any of claims 1–6, the second integrated circuit receiving as data signals to be processed the signals representing the coefficients calculated by the first circuit, the circuits comprising a line/column selection terminal and receiving on said terminal complementary logic states so that the first circuit carries out a line transform while the second circuit carries out a column transform.

Transformée cosinus monodimensionnelle 16 points

## FIG_1

# FIG_2

A o————————o A+B

B o— — — —o A—B    C    o C (A—B)

# FIG_3

A o———————→o A+B

B o———————→o B

Opérateur d'addition
aller

A o———————→o A+B

B o———————→ C$_r$ o C$_r$ (A—B)

Opérateur papillon
aller

A o———————o A

B o———————→o A+B

Opérateur d'addition
retour

A o———————→o A+C$_r$B

B o— C$_r$ ———→o A—C$_r$B

Opérateur papillon
retour

# FIG_4

MEM I

$\overline{H}_{cy}$

$H_{cy}$

Séquenceur micro-programmé

Unité de calcul

BUS E

entrée/sortie

$\overline{H}_{cy}$

MEM II

$H_{cy}$

$H_{cy}$

256 T'éch

512 T'éch

Téch = 1/13,5 MHz = 74 ns

EP 0 254 628 B1

# FIG_5

adresses

I mot parmi N

4

décodeur

**MEM**
I ligne de
N mots de
p bits

p bits

R1  R2

p  p

BUS I

UAL

du
séquenceur

microprogrammé

p+1

SR2

p

# FIG_6

EP 0 254 628 B1

# FIG_7

EP 0 254 628 B1

# FIG_8

EP 0 254 628 B1

# FIG_9

EP 0 254 628 B1

# FIG_10

# FIG_11

$T_{ech}$

Compteur → 4 i, 4 j → transform. d'indices → i', 4, j', 4 → Mémoire tampon

# FIG_12

i → 4 → [⊠] → i'

j → 4 → [⊠] → BR → j'

Tlin/Tcol

# FIG_13

$H_i$

Reset → Séquenceur micro-programmé → ual/reg/shift

adresses mémoire travail

T/T$^{-1}$ →

→ $H_{cy}$

Commande MEM I

1 3
[⊠]
2 4

Commande MEM II

$T_{lin}/T_{col}$ → générateur d'adresses

adresses mémoire tampon

COUT

CIN

H

1 → [⊠] → 3    si H=1 $\begin{cases} 3=1 \\ 4=2 \end{cases}$

2 → → 4    si H=0 $\begin{cases} 3=2 \\ 4=1 \end{cases}$